# EUROPEAN PATENT SPECIFICATION

(11) **EP 3 383 144 B1**
(45) Date of publication and mention of the grant of the patent: **18.05.2022**
(21) Application number: 16868620.2
(22) Date of filing: 24.11.2016
(51) Int. Cl.: H05H 1/24, B01J 19/08, B01D 53/92, B01D 53/32

(54) **PLASMA REACTOR**
PLASMAREAKTOR
RÉACTEUR À PLASMA

(30) Priority: 24.11.2015 JP 2015228530
(43) Date of publication of application: 03.10.2018
(73) Proprietor: NGK Spark Plug Co., Ltd., Nagoya-shi, Aichi 467-8525 (JP)
(72) Inventor: KAWAJIRI Fumikazu, Nagoya-shi Aichi 467-8525 (JP); NADANAMI Norihiko, Nagoya-shi Aichi 467-8525 (JP); SAKAI Shigehito, Nagoya-shi Aichi 467-8525 (JP); MADOKORO Kazuhiko, Shiga 520-2593 (JP); NAITO Kazuya, Shiga 520-2593 (JP); UENISHI Mari, Shiga 520-2593 (JP); TANAKA Hirohisa, Shiga 520-2593 (JP)
(74) Representative: Zimmermann & Partner Patentanwälte mbB
(86) International application number: PCT/JP2016/084792
(87) International publication number: WO 2017/090677

(56) References cited:
- WO-A1-2014/171248
- WO-A1-2014/171248
- JP-A- 2002 129 947
- JP-A- 2005 203 362
- JP-A- 2005 203 362
- US-A- 6 162 323

## Description

### TECHNICAL FIELD

The present invention relates to a plasma reactor, and particularly to a plasma reactor suitable for use in an apparatus for cleaning exhaust gas from an internal combustion engine.

### BACKGROUND ART

Exhaust gas from an engine (in particular, a diesel engine) contains, for example, carbon monoxide (CO), hydrocarbon (HC), nitrogen oxide (NOx), and particulate matter (PM). A recently proposed technique for removal of PM contained in exhaust gas involves collection of PM with a diesel particulate filter (DPF), and heating of the exhaust gas by post injection of a fuel or injection of the fuel into an exhaust pipe to thereby combust the PM collected on the DPF. Unfortunately, this technique involves consumption of the fuel during combustion of the PM, resulting in poor fuel efficiency. Also, this technique is not suitable for a compact vehicle that is generally used for so-called urban driving, since the temperature of exhaust gas does not reach the PM combustion temperature during urban driving.

In view of the foregoing, there have been proposed various techniques involving generation of low-temperature plasma (nonequilibrium plasma) through dielectric barrier discharge by application of voltage between electrodes disposed in parallel on a dielectric body at intervals, and oxidation and removal of PM contained in exhaust gas flowing between the electrodes by means of the plasma (see, for example, Patent Documents 1 to 3). Specifically, Patent Document 1 discloses a technique for generating plasma by application of voltage between a pair of facing stripe-form electrodes. The stripe-form electrodes are disposed such that strips forming one of the electrodes intersect with strips forming the other electrode as viewed in a direction of lamination. Patent Document 2 discloses a technique for generating plasma by application of voltage between a pair of facing unit electrodes. One of the unit electrodes includes a ceramic dielectric body, and the dielectric body includes therein a pair of electrically conductive films disposed in parallel to be separated from each other. Each of the electrically conductive films has a plurality of through holes, and the pattern and opening area of the through holes of one of the films differ from those of the through holes of the other film. Patent Document 3 discloses a technique for generating plasma by application of voltage between a pair of facing electrodes. Each of the electrodes is composed of a ceramic plate (dielectric body) including therein an electrically conductive film, and the electrically conductive film has a plurality of circular through holes.

### PRIOR ART DOCUMENT

### PATENT DOCUMENT

Patent Document 1: Japanese Patent Application Laid-Open (kokai) No. 2011-11106 (e.g., FIGS. 3 and 4)
Patent Document 2: Japanese Patent Application Laid-Open (kokai) No. 2005-203362
Patent Document 3: International Patent Publication WO 2004/114728 (e.g., FIG. 3)

WO 2014/171248 A1 describes a sterilization device comprising grid-like electrode units made of rod-shaped wires and a ceramic layer covering the wires. Gas can flow through the grid-like electrode units. Electrode units kept at different electrical potential may be offset relative to each other as shown in Figures 7 and 8 of WO 2014/171248 A1.

### SUMMARY OF THE INVENTION

### PROBLEM TO BE SOLVED BY THE INVENTION

In the conventional technique disclosed in Patent Document 1, discharge occurs only at intersections between strips forming the upper stripe-form electrode and strips forming the lower stripe-form electrode. In such a case, plasma is generated only at the intersections (i.e., in a narrow region), resulting in low exhaust gas cleaning efficiency. In the conventional technique disclosed in Patent Document 3, the electrodes having through holes provided in the same pattern are disposed in parallel with each other, and thus discharge occurs only at the opening edges of through holes provided in the upper electrode and at the opening edges of through holes provided directly below the through holes of the upper electrode. In such a case, plasma is generated only in a narrow region (i.e., in the vicinity of the opening edges), resulting in low exhaust gas cleaning efficiency. In the conventional technique disclosed in Patent Document 2, through holes are provided only in one of the unit electrodes, and thus discharge occurs at unspecific portions. In such a case, the plasma generation region and generation amount are likely to vary, resulting in low exhaust gas cleaning efficiency.

In view of the foregoing, an object of the present invention is to provide a plasma reactor that can reliably generate plasma in a broad region.

### MEANS FOR SOLVING THE PROBLEM

In view of the above, a plasma reactor according to the invention is defined by the subject-matter of claim 1.

The plasma reactor comprises a plurality of electrode panels each including a dielectric body and an electrode, the electrode panels being disposed in parallel at intervals, the plasma reactor being adapted to generate plasma by dielectric barrier discharge between the electrode panels, the plasma reactor being characterized in that each of the electrodes has a plurality of through holes each penetrating the electrode in a thickness direction and having a shape having a corner in plan view, and at least some of the corners of the through holes of a first electrode of the electrodes do not overlap with at least some of the corners of the through holes of a second electrode adjacent to the first electrode.

According to the invention, the electrode panel including the first electrode and the electrode panel including the second electrode are alternately disposed, the electrode panels are disposed such that at least some of the corners of the through holes of the first electrode do not overlap with at least some of the corners of the through holes of the second electrode. Therefore, dielectric barrier discharge occurs between the opening edges of the through holes of the first electrode and the opening edges of the through holes of the second electrode, which opening edges are located obliquely downward of the opening edges of the through holes of the first electrode. As a result, plasma can be generated in a broad region. In addition, each of the through holes has a shape having a corner in plan view, and discharge is likely to occur at the corner. Thus, when each through hole has a polygonal shape having a plurality of corners, discharge occurs at many points; hence, plasma can be reliably generated in a broad region. Therefore, PM contained in exhaust gas flowing between the first and second electrodes can be effectively oxidized and removed by means of the plasma.

At least some of the through holes of the first electrode are disposed offset in a planar direction from at least some of the through holes of the second electrode. In such a case, dielectric barrier discharge occurs between the opening edges of the through holes of the first electrode and the opening edges of the through holes of the second electrode, which opening edges are located obliquely downward of the opening edges of the through holes of the first electrode. Thus, plasma can be generated in a broad region.

The through holes of the first electrode and the through holes of the second electrode may be disposed at the same pitch. In such a case, all the through holes of the first electrode can be reliably disposed offset from all the through holes of the second electrode, since all the through holes of each electrode are moved as a result of movement of the electrode.

The through holes of the first electrode may have the same shape or size as the through holes of the second electrode. In such a case, the first and second electrodes can be produced by the same method, and thus the plasma reactor can be manufactured at reduced cost.

At least one of the first electrode and the second electrode may have a plurality of through holes defined by at least a plurality of first linear portions extending in a first direction and a plurality of second linear portions extending in a second direction intersecting with the first direction. In such a case, each through hole can be readily provided with a plurality of corners at which discharge occurs, and thus plasma can be effectively generated. Particularly preferably, either the first electrode or the second electrode has a plurality of through holes defined by a plurality of first linear portions extending in the first direction and a plurality of second linear portions extending in the second direction intersecting with the first direction, and has a grid pattern in plan view. In such a case, each through hole can be readily provided with four corners at which discharge occurs, and thus plasma can be effectively generated.

Both the first electrode and the second electrode may have a plurality of through holes defined by a plurality of first linear portions extending in the first direction and a plurality of second linear portions extending in the second direction intersecting with the first direction, and may have a grid pattern in plan view. In such a case, each through hole can be readily provided with four corners in both the first and second electrodes, and thus plasma can be more effectively generated. Each of intersection points between the first linear portions of the first electrode and the second linear portions of the first electrode is preferably located within a region within which the distance from the center point of the corresponding through hole of the second electrode is 0% to 80% where the distance at the center point is defined as 0% and the distance between the center point and an opening edge of the through hole is defined as 100%. In such a case, the distance between the first linear portions of the first electrode and the first linear portions of the second electrode can be maintained approximately constant, and the distance between the second linear portions of the first electrode and the second linear portions of the second electrode can also be maintained approximately constant. Therefore, discharge occurs uniformly in these electrodes, and thus plasma can be more reliably generated in a broad region.

The through holes of the first electrode may be disposed offset in the first or second direction from the through holes of the second electrode. In such a case, dielectric barrier discharge occurs between the end edges of the first linear portions (or the second linear portions) defining the through holes of the first electrode and the end edges of the first linear portions (or the second linear portions) defining the through holes of the second electrode, which end edges are located obliquely downward of the end edges of the first linear portions (or the second linear portions) of the first electrode. Thus, plasma can be generated in a broad region.

The through holes of the first electrode are preferably disposed offset in the first and second directions from the through holes of the second electrode. In such a case, discharge occurs between the end edges of the first linear portions defining the through holes of the first electrode and the end edges of the first linear portions defining the through holes of the second electrode, which end edges are located obliquely downward of the end edges of the first linear portions of the first electrode, and discharge also occurs between the end edges of the second linear portions defining the through holes of the first electrode and the end edges of the second linear portions defining the through holes of the second electrode, which end edges are located obliquely downward of the end edges of the second linear portions of the first electrode. Thus, plasma can be generated in a broader region.

### BRIEF DESCRIPTION OF THE DRAWINGS

FIG. 1 is a schematic sectional view illustrating a PM remover according to the present embodiment.
FIG. 2 is a schematic perspective view illustrating a state where a first electrode panel and a second electrode panel are disposed in parallel.
FIG. 3 is a plan view illustrating the relationship between a first electrode and a second electrode.
FIG. 4 is a plan view of a substantial portion illustrating the relationship between the first electrode and the second electrode.
FIG. 5 is a plan view of a substantial portion of the second electrode.
FIG. 6 is a plan view of the first electrode.
FIG. 7 is an explanatory view illustrating a state where discharge occurs.
FIG. 8 is an explanatory view illustrating a state where discharge occurs in a conventional technique.
FIG. 9 is a plan view illustrating the relationship between a first electrode and a second electrode in another embodiment.
FIG. 10 is a plan view illustrating the relationship between a first electrode and a second electrode in still another embodiment.
FIG. 11 is a plan view of the structure of an electrode in yet another embodiment.
FIG. 12 is a plan view of the structure of an electrode in yet another embodiment.

### MODES FOR CARRYING OUT THE INVENTION

A PM remover 1, which is an embodiment of the present invention, will next be described in detail with reference to the drawings.

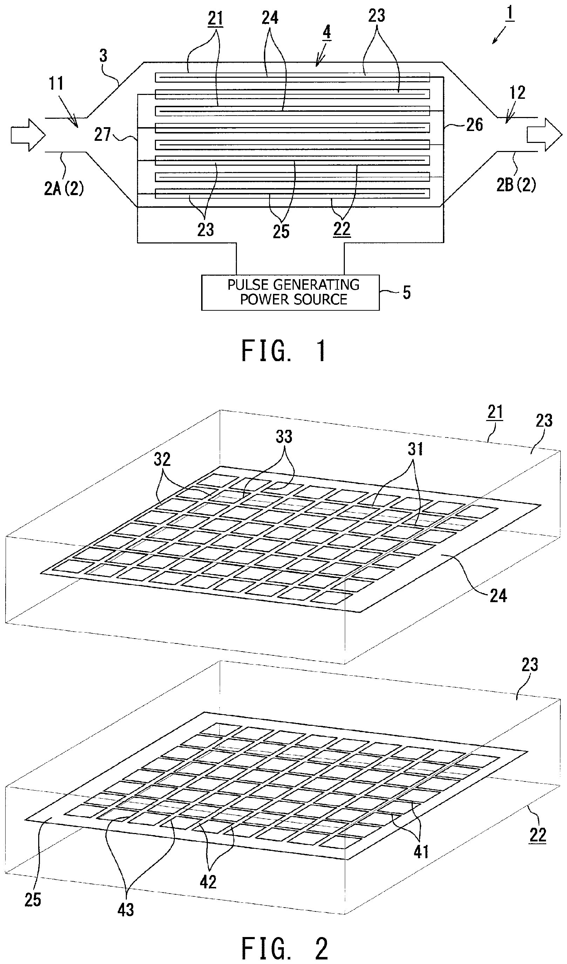

As illustrated in FIG. 1, the PM remover 1 according to the present embodiment is an apparatus for removing PM contained in exhaust gas from an automotive engine (not illustrated) and is attached to an exhaust pipe 2. The PM remover 1 includes a flow tube 3, a plasma reactor 4, and a pulse generating power source 5.

The flow tube 3 is formed of, for example, stainless steel and has the shape of a pipe (tube) having an exhaust gas inlet 11 at one end and an exhaust gas outlet 12 at the other end. The exhaust gas inlet 11 is connected to an engine-side portion 2A of the exhaust pipe 2, and the exhaust gas outlet 12 is connected to a portion 2B of the exhaust pipe 2 opposite the engine-side portion 2A. Exhaust gas from the engine flows through the engine-side portion 2A of the exhaust pipe 2 and then enters the flow tube 3 through the exhaust gas inlet 11. The exhaust gas then flows through the flow tube 3 and is discharged from the exhaust gas outlet 12 to the portion 2B of the exhaust pipe 2 opposite the engine-side portion 2A.

As illustrated in FIGS. 1 and 2, the plasma reactor 4 is disposed in the flow tube 3 and includes a plurality of electrode panels 21 and 22. The electrode panels 21 and 22 extend in a direction of flow of exhaust gas through the flow tube 3 (i.e., in a direction from the exhaust gas inlet 11 toward the exhaust gas outlet 12), and are disposed in parallel at regular intervals (0.5 mm in the present embodiment) in a direction perpendicular to the flow direction. In the plasma reactor 4 according to the present embodiment, first electrode panels 21 and second electrode panels 22 are alternately disposed. For the sake of convenience of description, the plasma reactor according to the present embodiment has a structure including eight electrode panels 21 and 22 disposed in parallel; however, an actual plasma reactor includes a larger number of electrode panels.

Each first electrode panel 21 has a rectangular plate-like form and is composed of a dielectric body 23 and a first electrode 24 included therein. Similarly, each second electrode panel 22 has a rectangular plate-like form and is composed of a dielectric body 23 and a second electrode 25 included therein. The dielectric body 23 is prepared through firing of a ceramic green sheet formed of a ceramic material, such as alumina (Al₂O₃). The ceramic green sheet is formed through tape casting or extrusion molding. The electrode 24 or 25 is formed through, for example, screen printing (patterning) of an electrically conductive paste (e.g., a tungsten paste) on the surface of the ceramic green sheet. The electrode panel 21 or 22 is formed through firing of a green sheet laminate prepared by lamination of a ceramic green sheet on the ceramic green sheet having the first electrode 24 or second electrode 25 printed thereon. Notably, a portion of the electrode 24 or 25 exposed from the dielectric body 23 is plated with, for example, Ni.

As illustrated in FIG. 1, a first wire 26 and a second wire 27 are alternately connected to the electrodes 24 and 25 sequentially from one end side of the array direction of the electrode panels 21 and 22. The first wire 26 and the second wire 27 are electrically connected to a first terminal and a second terminal of the pulse generating power source 5, respectively.

As illustrated in FIGS. 2 to 6, each first electrode 24 has a plurality of through holes 33 penetrating the first electrode 24 in the thickness direction thereof and defined by a plurality of first linear portions 31 and a plurality of second linear portions 32. Similarly, each second electrode 25, which is adjacent to the first electrode 24, has a plurality of through holes 43 penetrating the second electrode 25 in the thickness direction thereof and defined by a plurality of first linear portions 41 and a plurality of second linear portions 42. Specifically, in the present embodiment, the electrodes 24 and 25 respectively have the through holes 33 and 43 defined by the first linear portions 31 and 41 and the second linear portions 32 and 42. Notably, the lengths, widths, and thicknesses of the first linear portions 31 and 41 and the second linear portions 32 and 42 can be appropriately determined in consideration of, for example, applied voltage.

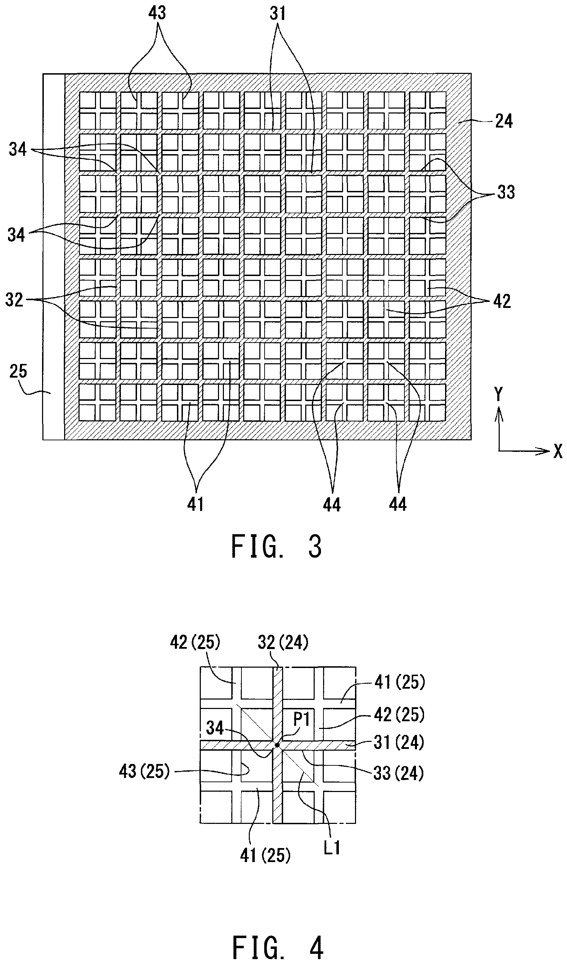

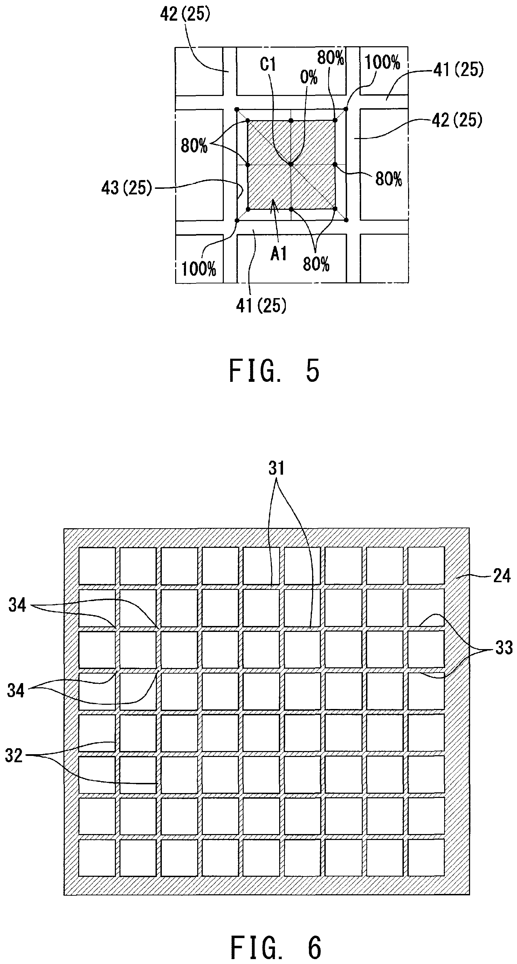

As illustrated in FIG. 3, the first linear portions 31 of each first electrode 24 extend straightly in an X-axis direction (first direction) in parallel with the flow direction of exhaust gas and are disposed at regular intervals in a Y-axis direction (second direction) perpendicular to the X-axis direction. The second linear portions 32 of the first electrode 24 extend straightly in the Y-axis direction and are disposed at regular intervals in the X-axis direction. Thus, the first linear portions 31 and the second linear portions 32 form a grid pattern of 0.5 mm × 0.5 mm squares in plan view (see FIG. 6). Therefore, each of the through holes 33 defined by the first linear portions 31 and the second linear portions 32 has a square shape having four corners 34 in plan view.

Similarly, the first linear portions 41 of each second electrode 25 extend straightly in the X-axis direction and are disposed at regular intervals in the Y-axis direction. The second linear portions 42 of the second electrode 25 extend straightly in the Y-axis direction and are disposed at regular intervals in the X-axis direction. Thus, the first linear portions 41 and the second linear portions 42 form a grid pattern of 0.5 mm × 0.5 mm squares in plan view. Therefore, each of the through holes 43 defined by the first linear portions 41 and the second linear portions 42 has a square shape having four corners 44 in plan view. That is, the through holes 33 of the first electrode 24 have the same shape as the through holes 43 of the second electrode 25. The through holes 33 of the first electrode 24 and the through holes 43 of the second electrode 25 have the same size and are disposed at the same pitch.

As illustrated in FIGS. 3 and 4, in the present embodiment, all the corners 34 of the through holes 33 of each first electrode 24 do not overlap with all the corners 44 of the through holes 43 of each second electrode 25. In other words, all the through holes 33 of the first electrode 24 are disposed offset in a planar direction from all the through holes 43 of the second electrode 25. In the present embodiment, the through holes 33 of the first electrode 24 are disposed offset in the X-axis and Y-axis directions from the through holes 43 of the second electrode 25.

As illustrated in FIGS. 4 and 5, each of the intersection points P1 between the first linear portions 31 and the second linear portions 32 of each first electrode 24 is located within a region A1 within which the distance from the center point C1 of the corresponding through hole 43 of each second electrode 25 is 0% to 80% where the distance at the center point C1 is defined as 0% and the distance between the center point C1 and an opening edge of the through hole 43 is defined as 100%. The intersection point P1 is located on a diagonal line L1 of the through hole 43 of the second electrode 25. That is, some of the corners 34 of the corresponding through holes 33 of the first electrode 24 are located at the center of the through hole 43 of the second electrode 25. The intersection point P1 is located at a position such that the distance from one end of the diagonal line L1 is 10% to 90% of the length of the diagonal line L1 (50% in the present embodiment). Thus, the intersection points P1 between the first linear portions 31 and the second linear portions 32 of the first electrode 24 are located at the centers of the corresponding through holes 43 of the second electrode 25. In the electrode panel 21 or 22, the aperture ratio of the through holes 33 or 43 per cm² (per unit area) is 20% to 60%, more preferably 30% to 50%. In the electrode panel 21 or 22, the number of the corners 34 or 44 per cm² (per unit area) is 100 or more.

As illustrated in FIG. 1, the plasma reactor 4 according to the present embodiment is used for, for example, removal of PM contained in exhaust gas. In such a case, application of a pulse voltage (e.g., peak voltage: 5 kV (5,000 V), pulse repetition frequency: 100 Hz) from the pulse generating power source 5 to the facing electrodes 24 and 25 generates dielectric barrier discharge at the opening edges of the through holes 33 and 43, and the dielectric barrier discharge generates plasma between the electrodes 24 and 25. The generation of plasma causes oxidation (combustion) and removal of PM contained in exhaust gas flowing between the electrodes 24 and 25.

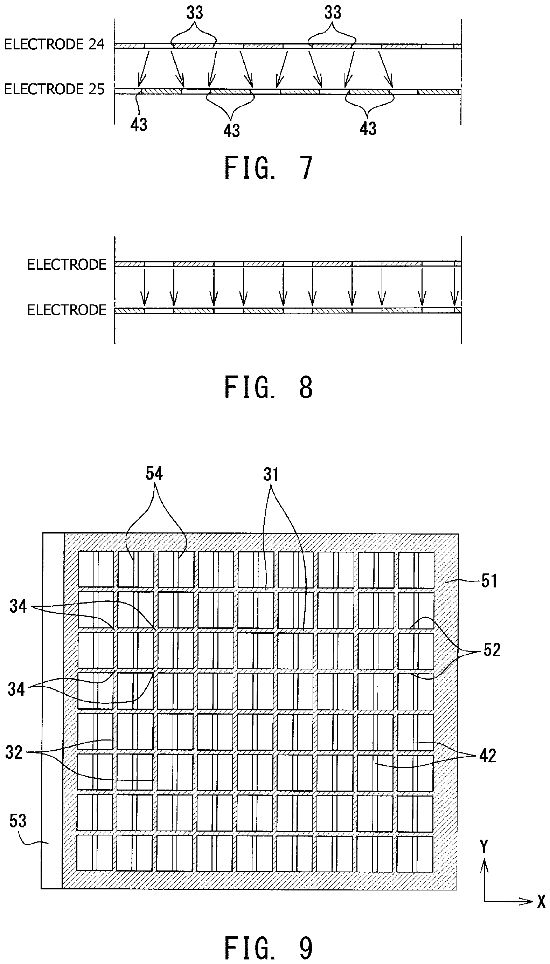

Accordingly, in the plasma reactor 4 according to the present embodiment, the first electrode panels 21 each including the first electrode 24 are disposed alternately with the second electrode panels 22 each including the second electrode 25 such that all the corners 34 of the through holes 33 of each first electrode 24 do not overlap with all the corners 44 of the through holes 43 of each second electrode 25. Thus, dielectric barrier discharge occurs between the opening edges of the through holes 33 of each first electrode 24 and the opening edges of the through holes 43 of a second electrode 25 located downward of the first electrode 24. The opening edges of the through holes 43 of the second electrode 25 are located obliquely downward of the opening edges of the through holes 33 of the first electrode 24 (see arrows in FIG. 7). In this case, plasma can be generated in a broad region unlike the case of a conventional technique wherein discharge occurs only in the direction of array of electrode panels (see FIG. 8). Each of the through holes 33 or 43 has a shape having the corners 34 or 44 in plan view. Discharge is likely to occur at the corners 34 or 44. Thus, discharge occurs at many points in the present embodiment wherein each of the through holes 33 or 43 has a polygonal shape having a plurality of corners 34 or 44. Consequently, plasma can be reliably generated in a broad region. Therefore, the plasma can be used to effectively oxidize and remove PM contained in exhaust gas flowing between the first electrode 24 and the second electrode 25.

The aforementioned embodiment may be modified as described below.

In the aforementioned embodiment, the printing position of the first electrode 24 of each first electrode panel 21 is offset in a planar direction from that of the second electrode 25 of each second electrode panel 22. For example, when the electrodes 24 and 25 are viewed in a thickness direction (see FIG. 3), the through holes 33 do not coincide with the through holes 43; for example, the through holes 33 are offset from the through holes 43 such that at least some of the corners 44 of the through holes 43 of the second electrode 25 are located within the through holes 33 of the first electrode 24. However, the printing position of the electrode 24 may be aligned with that of the electrode 25, and the electrode panels 21 and 22 may be disposed offset from each other in the X-axis and Y-axis directions during assembly of the plasma reactor so that the through holes 43 of the second electrode 25 are offset from the through holes 33.

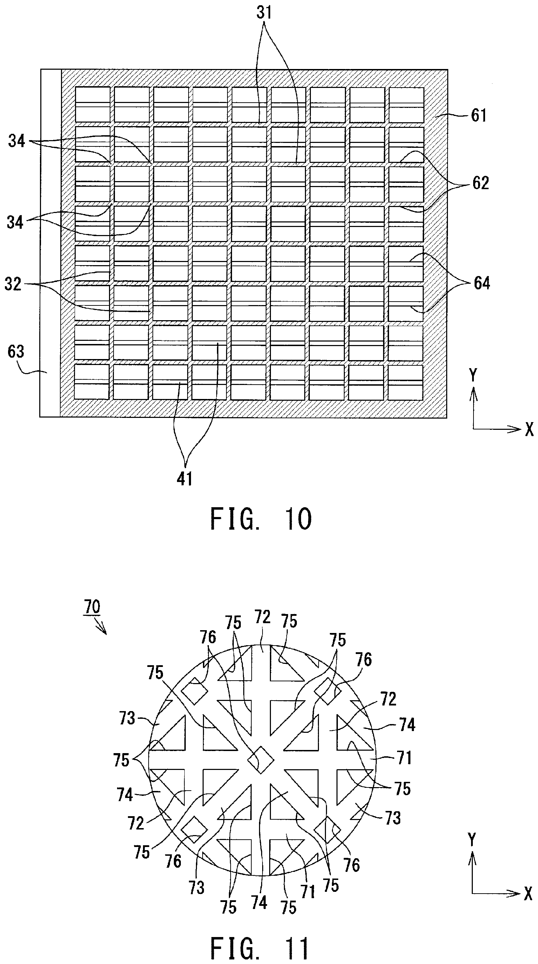

In the aforementioned embodiment, the through holes 33 of the first electrode 24 are disposed offset in the X-axis and Y-axis directions from the through holes 43 of the second electrode 25. However, as illustrated in FIG. 9, a plurality of through holes 52 of a first electrode 51 may be disposed offset only in the X-axis direction from a plurality of through holes 54 of a second electrode 53. Alternatively, as illustrated in FIG. 10, a plurality of through holes 62 of a first electrode 61 may be disposed offset only in the Y-axis direction from a plurality of through holes 64 of a second electrode 63.

In the aforementioned embodiment, the through holes 33 of the first electrode 24 have the same shape (square shape) as the through holes 43 of the second electrode 25. However, the through holes 33 may have a shape different from that of the through holes 43.

In the aforementioned embodiment, both the first electrode 24 and the second electrode 25 have the through holes 33 and 43 defined by the first linear portions 31 and 41 and the second linear portions 32 and 42, respectively, and have a grid pattern in plan view. However, either the first electrode 24 or the second electrode 25 may have a plurality of through holes defined by a plurality of first linear portions and a plurality of second linear portions, and may have a grid pattern in plan view.

At least one of the first electrode 24 of the first electrode panel 21 and the second electrode 25 of the second electrode panel 22 in the aforementioned embodiment may be replaced with an electrode 70 as illustrated in FIG. 11. The electrode 70 has a plurality of first linear portions 71, second linear portions 72, third linear portions 73, and fourth linear portions 74, and has a large number of right triangular through holes 75. The first linear portions 71 extend straightly in a first direction (X-axis direction) in parallel with the flow direction of exhaust gas and are disposed at regular intervals in a second direction (Y-axis direction) perpendicular to the first direction. The second linear portions 72 extend straightly in the second direction and are disposed at regular intervals in the first direction. Thus, the first linear portions 71 and the second linear portions 72 form a grid pattern of squares. The third linear portions 73 each extend on a diagonal line of each of squares defined by the first linear portions 71 and the second linear portions 72 and in a third direction inclined to the first and second directions by 45°. The fourth linear portions 74 each extend on a diagonal line of each of squares defined by the first linear portions 71 and the second linear portions 72 and in a fourth direction perpendicular to the third direction. The electrode 70 has through holes 76 each extending in the thickness direction thereof and being disposed at the center of each of regions where the first linear portions 71, the second linear portions 72, the third linear portions 73, and the fourth linear portions 74 intersect one another. Each through hole 76 has, for example, a shape of a square having sides extending in the third and fourth directions.

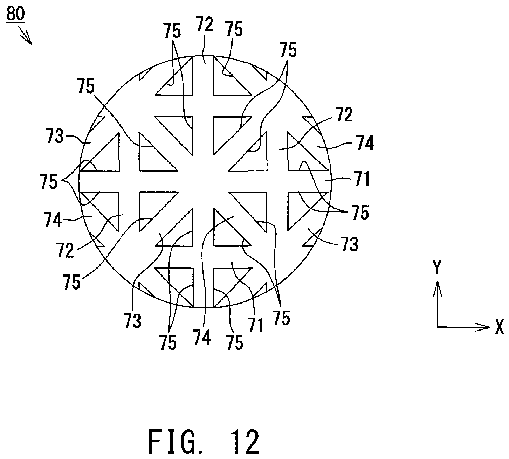

Notably, as illustrated in FIG. 11, the through holes 76 are provided in all the regions where the first linear portions 71, the second linear portions 72, the third linear portions 73, and the fourth linear portions 74 intersect one another. However, the through holes 76 may be provided not in all the regions where the first linear portions 71, the second linear portions 72, the third linear portions 73, and the fourth linear portions 74 intersect one another, but in any of the regions. As illustrated in FIG. 12, an electrode 80 having no through holes 76 may be used. At least one of the third linear portions 73 and the fourth linear portions 74 may be omitted from the configuration illustrated in FIG. 11.

The through holes 33 or 43 do not necessarily have a square shape in plan view, and may have a rectangular shape, a triangular shape, or a pentagonal or more polygonal shape. The through holes may have a shape having an arc (e.g., a teardrop shape).

In the aforementioned embodiment, the electrode panel 21 or 22 has a square grid pattern in plan view. However, the electrode panel may have, for example, a rhombic grid pattern in plan view.

In the aforementioned embodiment, the electrode panel 21 or 22 is composed of the dielectric body 23 and the electrode 24 or 25 included therein. However, the electrode panel may be prepared through formation of the electrode 24 or 25 on the surface of the dielectric body 23.

### INDUSTRIAL APPLICABILITY

The plasma reactor of the present invention is useful for cleaning exhaust gas from an engine (in particular, a diesel engine).

### DESCRIPTION OF REFERENCE NUMERALS

4: plasma reactor
21: first electrode panel serving as an electrode panel
22: second electrode panel serving as an electrode panel
23: dielectric body
24, 51, 61: first electrode serving as an electrode
25, 53, 63: second electrode serving as an electrode
31, 41, 71: first linear portion
32, 42, 72: second linear portion
33, 43, 52, 54, 62, 64, 75, 76: through hole
34, 44: corner
70, 80: electrode
A1: region
C1: center point
P1: intersection point between first and second linear portions forming first electrode

## Claims

1. A apparatus comprising a flow tube (3) with a gas inlet (11) at one end and a gas outlet (12) at another end, a plasma reactor (3) arranged in the flow tube (3), and a pulse generating power source (5), the plasma reactor (4) comprising a plurality of electrode panels (21, 22) each including a dielectric body (23) and an electrode (24, 25, 51, 53, 61, 63, 70, 80) included therein, the electrode panels (21, 22) having each a rectangular plate-like form and being disposed alternately in parallel at regular intervals, the electrode panels (21, 22) extending in a direction from the gas inlet (11) toward the gas outlet (12), the plasma reactor (4) being adapted to generate plasma by dielectric barrier discharge between the electrode panels (21, 22), wherein:
the electrode panels (21, 22) is obtainable through firing of a ceramic green sheet, an electrically conductive paste on the surface of the ceramic green sheet, and an optional further ceramic green sheet on the ceramic green sheet,
each of the electrodes (24, 25, 51, 53, 61, 63, 70, 80) has a plurality of through holes (33, 43, 52, 54, 62, 64, 75, 76) each penetrating the electrode (24, 25, 51, 53, 61, 63, 70, 80) in a thickness direction and having a shape having a corner (34, 44) in plan view; and
at least some of the corners (34) of the through holes (33, 52, 62, 75, 76) of a first electrode (24, 51, 61, 70, 80) of a first electrode panel (21) of the electrode panels (21, 22) do not overlap with at least some of the corners (44) of the through holes (43, 54, 64, 75, 76) of a second electrode (25, 53, 63, 70, 80) of a second electrode panel (22) of the electrode panels (21, 22) adjacent to the first electrode (24, 51, 61, 70, 80) so that, during operation of the plasma reactor, the dielectric barrier discharge occurs between opening edges of the through holes (33, 52, 62, 75, 76) of the first electrode (24, 51, 61, 70, 80) of the first electrode panel (21) and opening edges of the through holes (43, 54, 64, 75, 76) of the second electrode (25, 53, 63, 70, 80) of the second electrode panel (22), which opening edges are located obliquely downward of the opening edges of the through holes (33, 52, 62, 75, 76) of the first electrode (24, 51, 61, 70, 80) of the first electrode panel (21).

2. An apparatus according to claim 1, wherein each of the through holes (33, 43, 52, 54, 62, 64, 75, 76) has a polygonal shape having a plurality of corners (34, 44).

3. An apparatus according to claim 1 or 2, wherein at least one of the first electrode (24, 51, 61, 70, 80) and the second electrode (25, 53, 63, 70, 80) has a plurality of through holes (33, 43, 52, 54, 62, 64, 75, 76) defined by at least a plurality of first linear portions (31, 41, 71) extending in a first direction and a plurality of second linear portions (32, 42, 72) extending in a second direction intersecting with the first direction.

4. An apparatus according to any one of claims 1 to 3, wherein either the first electrode (24, 51, 61) or the second electrode (25, 53, 63) has a plurality of through holes (33, 43, 52, 54, 62, 64) defined by a plurality of first linear portions (31, 41) extending in a first direction and a plurality of second linear portions (32, 42) extending in a second direction intersecting with the first direction, and has a grid pattern in plan view.

5. An apparatus according to any one of claims 1 to 3, wherein both the first electrode (24, 51, 61) and the second electrode (25, 53, 63) have a plurality of through holes (33, 43, 52, 54, 62, 64) defined by a plurality of first linear portions (31, 41) extending in a first direction and a plurality of second linear portions (32, 42) extending in a second direction intersecting with the first direction, and have a grid pattern in plan view

6. An apparatus according to any one of claims 3 to 5, wherein each of intersection points (P1) between the first linear portions (31) of the first electrode (24) and the second linear portions (32) of the first electrode (24) is located within a region (A1) within which the distance from the center point (C1) of the corresponding through hole (43) of the second electrode (25) is 0% to 80% where the distance at the center point (C1) is defined as 0% and the distance between the center point (C1) and an opening edge of the through hole (43) is defined as 100%.

## Patentansprüche

1. Vorrichtung, die eine Strömungsröhre (3) mit einem Gaseinlass (11) an einem Ende und einem Gasauslass (12) an einem anderen Ende, einen in der Strömungsröhre (3) angeordneten Plasmareaktor (3) und eine pulserzeugende Stromquelle (5) aufweist, wobei der Plasmareaktor (4) eine Vielzahl von Elektrodenplatten (21, 22) umfasst, die jeweils einen dielektrischen Körper (23) und eine darin enthaltene Elektrode (24, 25, 51, 53, 61, 63, 70, 80) enthalten, die Elektrodenplatten (21, 22) jeweils eine rechteckige plattenartige Form aufweisen und abwechselnd parallel in regelmäßigen Abständen angeordnet sind, wobei sich die Elektrodenplatten (21, 22) in einer Richtung vom Gaseinlass (11) zum Gasauslass (12) erstrecken, wobei der Plasmareaktor (4) angepasst ist, um Plasma durch dielektrische Barrierenentladung zwischen den Elektrodenplatten (21, 22) zu erzeugen, wobei:
die Elektrodenplatten (21, 22) durch Brennen einer grünen Keramikplatte, einer elektrisch leitenden Paste auf der Oberfläche der grünen Keramikplatte und einer optionalen weiteren grünen Keramikplatte auf der grünen Keramikplatte erhalten werden können,
jede der Elektroden (24, 25, 51, 53, 61, 63, 70, 80) eine Vielzahl von Durchgangslöchern (33, 43, 52, 54, 62, 64, 75, 76) aufweist, die jeweils die Elektrode (24, 25, 51, 53, 61, 63, 70, 80) in einer Dickenrichtung durchdringen und eine Form haben, die in der Draufsicht eine Ecke (34, 44) aufweist; und
zumindest einige der Ecken (34) der Durchgangslöcher (33, 52, 62, 75, 76) einer ersten Elektrode (24, 51, 61, 70, 80) einer ersten Elektrodenplatte (21) der Elektrodenplatten (21, 22) nicht mit zumindest einigen der Ecken (44) der Durchgangslöcher (43, 54, 64, 75, 76) einer zweiten Elektrode (25, 53, 63, 70, 80) einer zweiten Elektrodenplatte (22) der Elektrodenplatten (21, 22), die benachbart zur ersten Elektrode (24, 51, 61, 70, 80) sind, überlappen, sodass während des Betriebs des Plasmareaktors die dielektrische Barriereentladung zwischen Öffnungsrändern der Durchgangslöcher (33, 52, 62, 75, 76) der ersten Elektrode (24, 51, 61, 70, 80) der ersten Elektrodenplatte (21) und Öffnungsrändern der Durchgangslöcher (43, 54, 64, 75, 76) der zweiten Elektrode (25, 53, 63, 70, 80) der zweiten Elektrodenplatte (22) auftritt, wobei die Öffnungsränder schräg nach unten zu den Öffnungsrändern der Durchgangslöcher (33, 52, 62, 75, 76) der ersten Elektrode (24, 51, 61, 70, 80) der ersten Elektrodenplatte (21) angeordnet sind.

2. Vorrichtung nach Anspruch 1, wobei jedes der Durchgangslöcher (33, 43, 52, 54, 62, 64, 75, 76) eine polygonale Form mit einer Vielzahl von Ecken (34, 44) aufweist.

3. Vorrichtung nach Anspruch 1 oder 2, wobei mindestens eine der ersten Elektrode (24, 51, 61, 70, 80) und der zweiten Elektrode (25, 53, 63, 70, 80) eine Vielzahl von Durchgangslöchern (33, 43, 52, 54, 62, 64, 75, 76) aufweist, die durch mindestens eine Vielzahl von ersten linearen Abschnitten (31, 41, 71), die sich in einer ersten Richtung erstrecken, und eine Vielzahl von zweiten linearen Abschnitten (32, 42, 72), die sich in einer zweiten Richtung erstrecken, die sich mit der ersten Richtung schneidet, definiert sind.

4. Vorrichtung nach einem der Ansprüche 1 bis 3, wobei entweder die erste Elektrode (24, 51, 61) oder die zweite Elektrode (25, 53, 63) eine Vielzahl von Durchgangslöchern (33, 43, 52, 54, 62, 64) aufweist, die durch eine Vielzahl von ersten linearen Abschnitten (31, 41), die sich in einer ersten Richtung erstrecken, und eine Vielzahl von zweiten linearen Abschnitten (32, 42), die sich in einer zweiten Richtung, die sich mit der ersten Richtung schneidet, erstrecken, definiert sind, und in der Draufsicht ein Netzmuster aufweist.

5. Vorrichtung nach einem der Ansprüche 1 bis 3, wobei sowohl die erste Elektrode (24, 51, 61) als auch die zweite Elektrode (25, 53, 63) eine Vielzahl von Durchgangslöchern (33, 43, 52, 54, 62, 64) aufweisen, die durch eine Vielzahl von ersten linearen Abschnitten (31, 41), die sich in eine erste Richtung erstrecken, und eine Vielzahl von zweiten linearen Abschnitten (32, 42), die sich in eine zweite Richtung erstrecken, die sich mit der ersten Richtung schneidet, definiert sind, und ein Netzmuster in der Draufsicht aufweisen.

6. Vorrichtung nach einem der Ansprüche 3 bis 5, wobei jeder der Schnittpunkte (P1) zwischen den ersten linearen Abschnitten (31) der ersten Elektrode (24) und den zweiten linearen Abschnitten (32) der ersten Elektrode (24) innerhalb eines Gebiets (A1) liegt, in dem der Abstand vom Mittelpunkt (C1) des entsprechenden Durchgangslochs (43) der zweiten Elektrode (25) 0 % bis 80 % beträgt, wobei der Abstand am Mittelpunkt (C1) als 0 % definiert ist und der Abstand zwischen dem Mittelpunkt (C1) und einem Öffnungsrand des Durchgangslochs (43) als 100 % definiert ist.

## Revendications

1. Appareil comprenant un tube d'écoulement (3) avec une entrée de gaz (11) à une extrémité et une sortie de gaz (12) à une autre extrémité, un réacteur à plasma (3) agencé dans le tube d'écoulement (3), et une source d'énergie produisant des impulsions (5), le réacteur à plasma (4) comprenant une pluralité de panneaux à électrode (21, 22) incluant chacun un corps diélectrique (23) et une électrode (24, 25, 51, 53, 61, 63, 70, 80) incluse dans celui-ci, les panneaux à électrode (21, 22) ayant chacun une forme analogue à une plaque rectangulaire et étant disposés de manière alternée en parallèle à intervalles réguliers, les panneaux à électrode (21, 22) s'étendant dans une direction de l'entrée de gaz (11) vers la sortie de gaz (12), le réacteur à plasma (4) étant adapté pour produire un plasma par décharge dans une barrière diélectrique entre les panneaux à électrode (21, 22), dans lequel:
les panneaux à électrode (21, 22) peuvent être obtenus par cuisson d'une feuille crue céramique, d'une pâte électriquement conductrice sur la surface de la feuille crue céramique, et d'une autre feuille crue céramique facultative sur la feuille crue céramique,
chacune des électrodes (24, 25, 51, 53, 61, 63, 70, 80) a une pluralité de trous traversants (33, 43, 52, 54, 62, 64, 75, 76) pénétrant chacun dans l'électrode (24, 25, 51, 53, 61, 63, 70, 80) dans une direction de l'épaisseur et ayant une forme ayant un angle (34, 44) en vue de dessus; et
au moins certains des angles (34) des trous traversants (33, 52, 62, 75, 76) d'une première électrode (24, 51, 61, 70, 80) d'un premier panneau à électrode (21) des panneaux à électrode (21, 22) ne chevauchent pas au moins certains des angles (44) des trous traversants (43, 54, 64, 75, 76) d'une seconde électrode (25, 53, 63, 70, 80) d'un second panneau à électrode (22) des panneaux à électrode (21, 22) adjacente à la première électrode (24, 51, 61, 70, 80) de sorte que, pendant le fonctionnement du réacteur à plasma, la décharge dans une barrière diélectrique se produit entre des bords d'ouverture des trous traversants (33, 52, 62, 75, 76) de la première électrode (24, 51, 61, 70, 80) du premier panneau à électrode (21) et des bords d'ouverture des trous traversants (43, 54 , 64, 75, 76) de la seconde électrode (25, 53, 63, 70, 80) du second panneau à électrode (22), lesquels bords d'ouverture sont situés obliquement vers le bas par rapport aux bords d'ouverture des trous traversants (33, 52, 62, 75, 76) de la première électrode (24, 51, 61, 70, 80) du premier panneau à électrode (21).

2. Appareil selon la revendication 1, dans lequel chacun des trous traversants (33, 43, 52, 54, 62, 64, 75, 76) a une forme polygonale ayant une pluralité d'angles (34, 44).

3. Appareil selon la revendication 1 ou 2, dans lequel au moins l'une parmi la première électrode (24, 51, 61, 70, 80) et la seconde électrode (25, 53, 63, 70, 80) a une pluralité de trous traversants (33, 43, 52, 54, 62, 64, 75, 76) définis par au moins une pluralité de premières parties linéaires (31, 41, 71) s'étendant dans une première direction et une pluralité de secondes parties linéaires (32, 42, 72) s'étendant dans une seconde direction coupant la première direction.

4. Appareil selon l'une quelconque des revendications 1 à 3, dans lequel la première électrode (24, 51, 61) ou la seconde électrode (25, 53, 63) a une pluralité de trous traversants (33, 43, 52, 54, 62, 64) définis par une pluralité de premières parties linéaires (31, 41) s'étendant dans une première direction et une pluralité de secondes parties linéaires (32, 42) s'étendant dans une seconde direction coupant la première direction, et a une configuration de grille en vue de dessus.

5. Appareil selon l'une quelconque des revendications 1 à 3, dans lequel la première électrode (24, 51, 61) et la seconde électrode (25, 53, 63) ont une pluralité de trous traversants (33, 43, 52, 54, 62, 64) définis par une pluralité de premières parties linéaires (31, 41) s'étendant dans une première direction et une pluralité de secondes parties linéaires (32, 42) s'étendant dans une seconde direction coupant la première direction, et ont une configuration de grille en vue de dessus.

6. Appareil selon l'une quelconque des revendications 3 à 5, dans lequel chacun des points d'intersection (P1) entre les premières parties linéaires (31) de la première électrode (24) et les secondes parties linéaires (32) de la première électrode (24) est situé dans une région (A1) à l'intérieur de laquelle la distance depuis le point central (C1) du trou traversant correspondant (43) de la seconde électrode (25) est 0 % à 80 % où la distance au point central (C1) est définie comme 0 % et la distance entre le point central (C1) et un bord d'ouverture du trou traversant (43) est définie comme 100 %.
